# EUROPEAN PATENT APPLICATION

(11) **EP 4 822 845 A1**
(43) Date of publication of application: **14.10.2026**
(21) Application number: 26150050.8
(22) Date of filing: 02.01.2026
(51) Int. Cl.: H01M 50/209, H01M 50/249, H01M 50/271, H01M 50/342, H01M 50/367

(54) **BATTERY MODULE**

(30) Priority: 11.04.2025 KR 20250047496
(71) Applicant: SAMSUNG SDI CO., LTD., Yongin-si, Gyeonggi-do 17084 (KR)
(72) Inventor: PARK, Kyung Min, 16678 Suwon-si (KR)
(74) Representative: Marks & Clerk LLP

(57) **Abstract**

A battery module includes a housing, a plurality of battery cells accommodated in the housing and each including a vent, a plurality of bus bars connecting neighboring battery cells of the plurality of battery cells, a cover including an inner cover surface facing the plurality of battery cells, and an outer cover surface opposite the inner cover surface, one or more cover holes passing through the inner cover surface and the outer cover surface and facing the vents, and a cover film facing the one or more cover holes and configured to open and close the one or more cover holes.

## Description

### BACKGROUND

### 1. Field

Aspects of embodiments of the present disclosure relate to a battery module.

### 2. Description of the Related Art

Generally, secondary batteries are batteries that can be charged and discharged, unlike primary batteries that cannot be recharged. Low-capacity secondary batteries are used in portable small electronic devices, such as smartphones, feature phones, laptop computers, digital cameras, and camcorders, while high-capacity secondary batteries are widely used as power sources for motor driving in hybrid vehicles, electric vehicles, and the like, and batteries for power storage, or the like. These secondary batteries include an electrode assembly composed of a positive electrode and a negative electrode, a case which accommodates the electrode assembly, and an electrode terminal connected to the electrode assembly.

The secondary battery may be used in a battery pack formed of a plurality of unit battery cells connected in series and/or parallel to provide high energy density. The battery pack may be formed by interconnecting electrode terminals of a plurality of unit batteries to meet a desired amount of power, and to implement a high-power secondary battery of, for example, an electric vehicle.

The above-described information disclosed in the technology that forms the background of the present disclosure is provided to improve understanding of the background of the present disclosure, and may include information that does not constitute the related art.

### SUMMARY

According to an aspect of embodiments of the present disclosure, a battery module capable of easily discharging gas and flames generated during thermal runaway of battery cells is provided.

According to another aspect of embodiments of the present disclosure, a battery module capable of preventing (preventing or substantially preventing) chain ignition of battery cells is provided.

The above and other aspects and features of the present disclosure will be described in or will be apparent from the following description of some embodiments of the present disclosure.

According to one or more embodiments of the present disclosure, a battery module includes: a housing; a plurality of battery cells accommodated in the housing and each including a vent; a plurality of bus bars connecting neighboring battery cells of the plurality of battery cells; a cover including an inner cover surface facing the battery cells, and an outer cover surface opposite the inner cover surface; one or more cover holes passing through the inner cover surface and the outer cover surface and facing the vents; and a cover film facing the one or more cover holes and configured to open and close (e.g., selectively open and close) the one or more cover holes.

An area of a cover hole of the one or more cover holes may be larger than an area of a vent of the vents.

Cover holes of the one or more cover holes may face at least two or more vents of the vents.

The cover film may include an inner cover film between the inner cover surface and the plurality of battery cells.

The cover film may include an outer cover film on the outer cover surface.

Each of the bus bars may be between the neighboring battery cells and the cover, and the battery module may further include a first blocking member between the cover and a bus bar of the plurality of bus bars.

The first blocking member may be fixed to the cover.

The first blocking member may surround the bus bar.

The first blocking member may include: a blocking body facing the inner cover surface and spaced apart from the bus bar; and a first bent portion that is bent from the blocking body toward a battery cell of the neighboring battery cells.

A width of the blocking body may be larger than a width of the bus bar.

The first bent portion may be between the vent and the bus bar.

The first blocking member may further include a second bent portion that is bent from the blocking body toward the battery cell and spaced apart from the first bent portion.

The first bent portion and the second bent portion may be spaced apart along a width direction of the blocking body.

The battery module may further include a second blocking member between the first blocking member and the bus bar and in contact with the bus bar.

An area of the second blocking member may be larger than an area of the bus bar.

The battery module may further include a fixing member on an outside of the cover and fixing the cover to the housing.

The fixing member may include a first sheet fixed to the outer cover surface and a second sheet extending from the first sheet and fixed to the housing.

The battery module may further include a pressing member protruding from the outer cover surface.

The pressing member may be elastically deformable.

The pressing member may be between the fixing member and the cover hole.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically showing a configuration of a battery module according to an embodiment of the present disclosure;
FIG. 2 is an exploded perspective view schematically showing the configuration of the battery module of FIG. 1;
FIG. 3 is a perspective view schematically showing a configuration of a battery cell according to an embodiment of the present disclosure;
FIG. 4 is a cross-sectional view schematically showing the configuration of the battery cell of FIG. 3;
FIG. 5 is a view schematically showing a configuration of an electrode assembly according to an embodiment of the present disclosure;
FIG. 6 is an exploded perspective view schematically showing a configuration of a cover assembly according to an embodiment of the present disclosure;
FIG. 7 is a cross-sectional view schematically showing the configuration of the cover assembly according to an embodiment of the present disclosure;
FIG. 8 is a plan view schematically showing the configuration of the cover assembly according to an embodiment of the present disclosure;
FIG. 9 is a cross-sectional view schematically showing a configuration of a cover film according to an embodiment of the present disclosure;
FIG. 10 is a cross-sectional view schematically showing a configuration of a first blocking member according to an embodiment of the present disclosure; and
FIG. 11 is a view schematically showing a configuration of a pressing member according to an embodiment of the present disclosure.

### DETAILED DESCRIPTION

Herein, some embodiments of the present disclosure will be described in further detail with reference to the attached drawings. Terms or words used in this specification and claims are not to be interpreted as being limited to ordinary or dictionary meanings and are to be interpreted as having meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some embodiments of the disclosure and do not necessarily represent all of the technical ideas of the disclosure, and that there may be various equivalents and modifications that may replace them at the time of filing.

Further, when used herein, the terms "comprise" or "include" and/or "comprising" or "including" specify the presence of the mentioned shapes, numbers, steps, operations, members, elements, and/or groups thereof, but are not intended to exclude the presence or addition of one or more other shapes, numbers, operations, members, elements, and/or groups thereof.

In addition, to facilitate understanding of the disclosure, the attached drawings may not be drawn to actual scale, and the dimensions of some components may be exaggerated. In addition, the same reference numbers may be assigned to the same components in different embodiments.

The statement that two objects for comparison are "equal" or "the same" means equal, the same, or substantially the same, and substantially the same may include deviations that are considered low in the art, for example, deviations of less than 5%. Additionally, uniformity of a parameter over a given region may mean uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it is to be understood that one or more other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When "C to D" is stated, it means greater than or equal to C and less than or equal to D unless otherwise specifically stated. When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe embodiments of the present disclosure, and are not intended to limit the present disclosure.

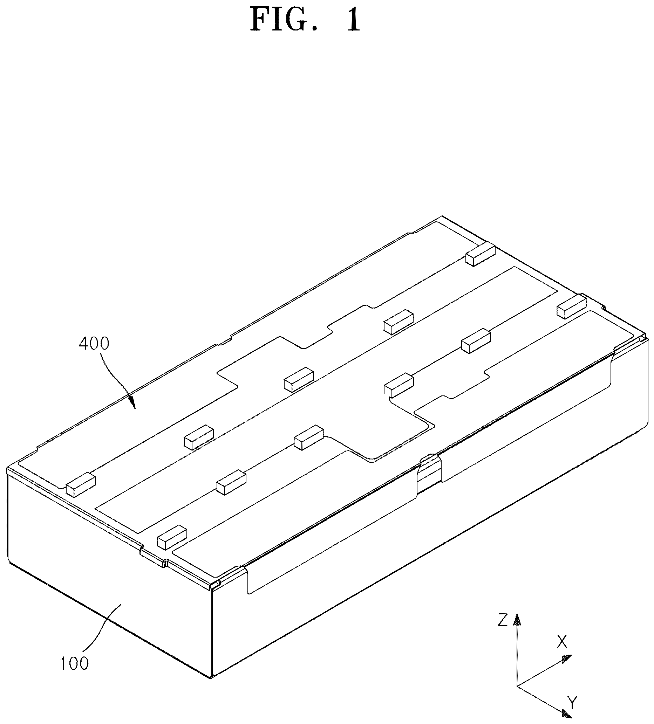

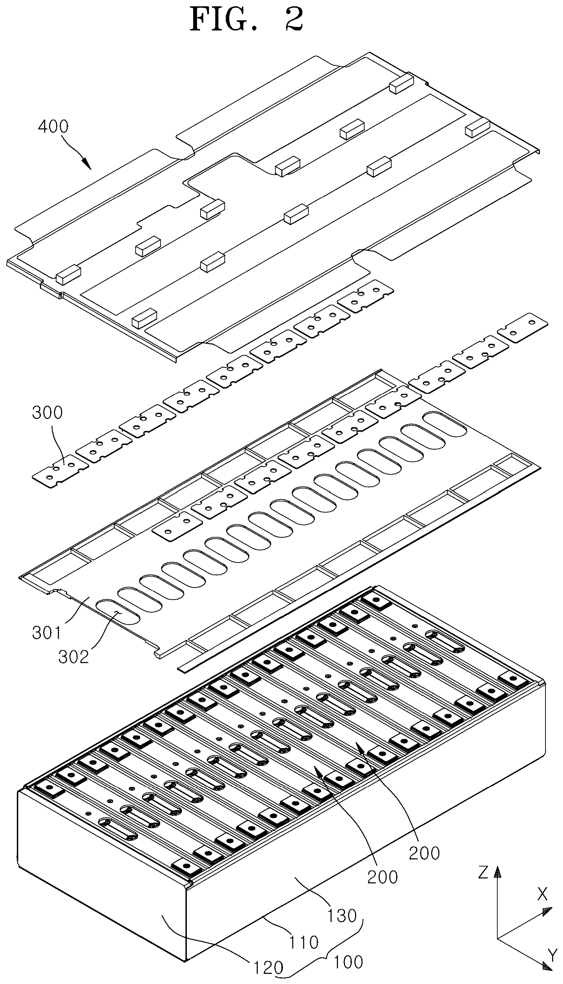

FIG. 1 is a perspective view schematically showing a configuration of a battery module according to an embodiment of the present disclosure; and FIG. 2 is an exploded perspective view schematically showing the configuration of the battery module of FIG. 1.

Referring to FIGS.1 and 2, the battery module according to an embodiment may include a housing 100, a battery cell 200, a bus bar 300, and a cover assembly 400.

The housing 100 may support the battery cell 200 and protect the battery cell 200 from an external impact and foreign substances.

A longitudinal direction of the housing 100 described below may be, for example, a direction parallel to an X-axis based on FIGS. 1 and 2, and a width direction of the housing 100 may be, for example, a direction parallel to a Y-axis based on FIGS. 1 and 2.

The housing 100 according to an embodiment may include a bottom plate 110, an end plate 120, and a side plate 130.

The bottom plate 110 may form an exterior of a lower side of the housing 100. The bottom plate 110 according to an embodiment may have a rectangular plate shape. However, a shape of the bottom plate 110 is not limited thereto and may have any of various shapes, such as any of a circular shape, an oval shape, a polygonal shape, and the like.

The end plate 120 may extend from the bottom plate 110 and form a portion of an exterior of a side surface of the housing 100.

The end plate 120 according to an embodiment may have a rectangular plate shape extending upward from the bottom plate 110. The end plate 120 may be disposed perpendicular to the bottom plate 110. A lower end portion of the end plate 120 may be connected to an edge of the bottom plate 110.

A pair of end plates 120 may be provided. The pair of end plates 120 may be disposed spaced apart at a certain interval and may face each other along the longitudinal direction of the housing 100. The pair of end plates 120 may be disposed parallel to each other.

The side plate 130 may extend from the bottom plate 110 and form a remaining portion of an exterior of the side surface of the housing 100.

The side plate 130 according to an embodiment may have a rectangular plate shape extending upward from the bottom plate 110. The side plate 130 may be disposed perpendicular to the bottom plate 110. A lower end portion of the side plate 130 may be connected to the edge of the bottom plate 110.

The side plate 130 may be disposed perpendicular to the end plate 120. An area of the side plate 130 may be larger than an area of the end plate 120.

A pair of side plates 130 may be provided. The pair of side plates 130 may be disposed spaced apart at a certain interval and may face each other along the width direction of the housing 100. The pair of side plates 130 may be disposed parallel to each other.

Accordingly, the housing 100 according to an embodiment may be formed to have a rectangular parallelepiped shape having an open upper side.

The battery cell 200 may function as a unit structure which stores and supplies power in the battery module.

The battery cell 200 may be disposed in the housing 100.

A plurality of battery cells 200 may be provided. The plurality of battery cells 200 may be arranged in a plurality of rows in the housing 100. For example, the plurality of battery cells 200 may be arranged in a plurality of rows along the longitudinal direction of the housing 100. However, an arrangement of the plurality of battery cells 200 is not limited thereto, and the plurality of battery cells 200 may be arranged in a plurality of rows along the width direction of the housing 100, or may be arranged in a plurality of rows along the longitudinal and width directions of the housing 100.

Herein, an example in which the battery cell 200 is a prismatic lithium-ion secondary battery will be described. However, the present disclosure is not limited thereto, and the battery cell 200 may be a lithium polymer battery or a cylindrical battery, for example.

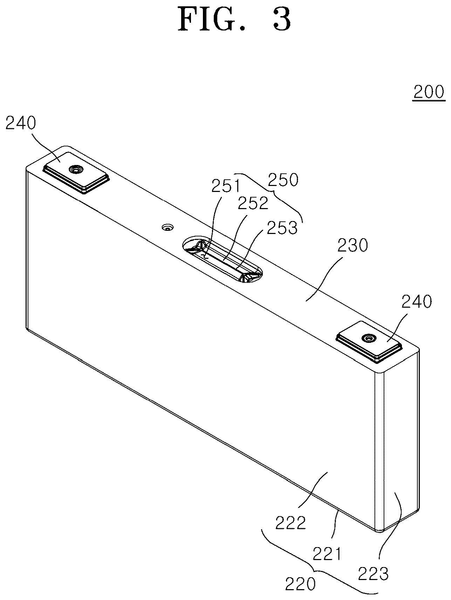

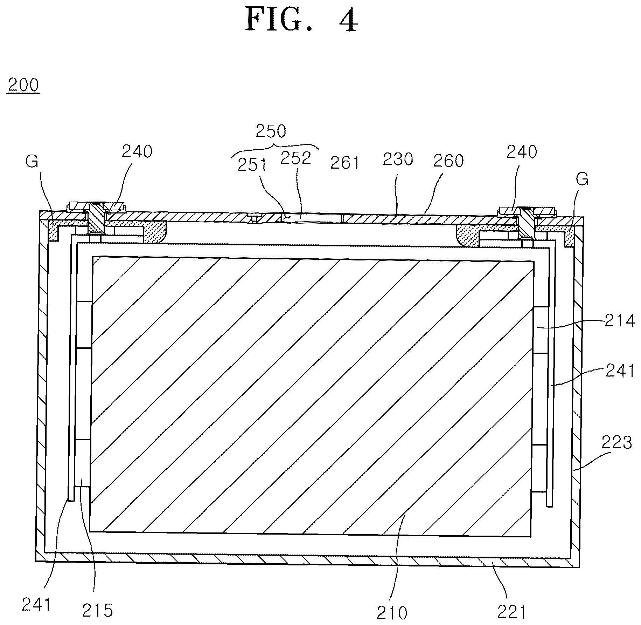

FIG. 3 is a perspective view schematically showing a configuration of a battery cell according to an embodiment of the present disclosure; and FIG. 4 is a cross-sectional view schematically showing the configuration of the battery cell of FIG. 3.

Referring to FIGS. 3 and 4, the battery cell 200 according to an embodiment includes an electrode assembly 210, a case 220, a cap plate 230, a terminal 240, and a vent 250.

The electrode assembly 210 may function as a unit structure which performs charging and discharging operations of power in the battery cell 200. The electrode assembly 210 may be accommodated in the case 220.

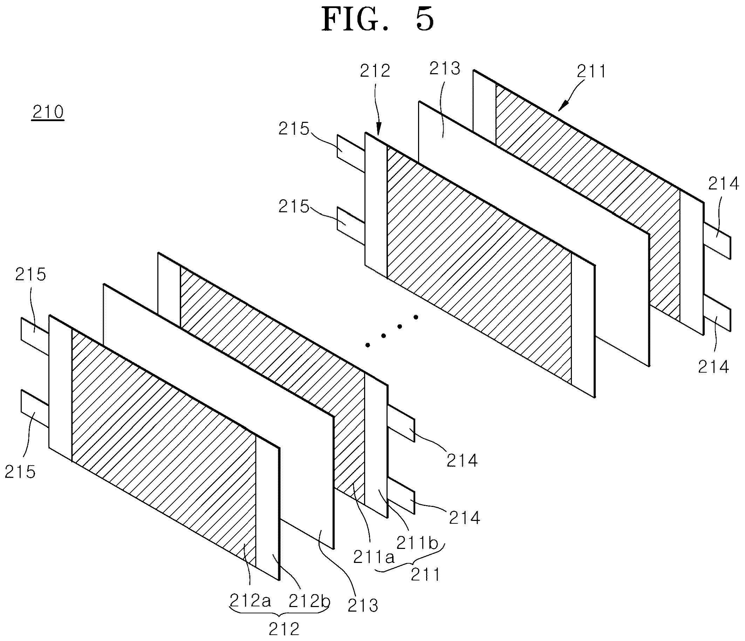

FIG. 5 is a view schematically showing a configuration of an electrode assembly according to an embodiment of the present disclosure.

The electrode assembly 210 according to an embodiment may include a first electrode 211, a second electrode 212, and a separator 213.

Herein, an example in which the electrode assembly 210 is formed as a stack type in which a plurality of first electrodes 211, a plurality of second electrodes 212, and a plurality of separators 213 are alternately stacked along a second direction will be described. However, the electrode assembly 210 is not limited thereto, and may also be formed as a jelly roll type wound around a winding axis in a state in which the first electrodes 211, the second electrodes 212, and the separators 213 are sequentially stacked.

In an embodiment, the first electrode 211 may function as a positive electrode of the electrode assembly 210.

The first electrode 211 according to an embodiment may be formed to have a foil shape including a metal material, such as aluminum or an aluminum alloy. Both, or opposite, surfaces of the first electrode 211 may be disposed perpendicular to the second direction. A type, size, shape, or the like of the first electrode 211 is not specifically limited as long as the first electrode 211 has conductivity and does not cause a chemical change in the secondary battery. A shape of the first electrode 211 may have any of various shapes in addition to the rectangular shape shown in FIG. 5.

A plurality of first electrodes 211 may be provided. The plurality of first electrodes 211 may be stacked along a direction. For example, the plurality of first electrodes 211 may be arranged along the longitudinal direction of the housing 100. A number of first electrodes 211 may be varied depending on a charging capacity of the battery cell 200 and the like.

The first electrode 211 may include a first active material layer 211a.

The first active material layer 211a may be provided in a form of being applied on at least a portion of the first electrode 211. The first active material layer 211a may be applied on both, or opposite, surfaces of the first electrode 211, or may be applied on only one surface of the first electrode 211.

In an embodiment, the first electrode 211 functions as a positive electrode, and the first active material layer 211a may include a positive electrode active material.

The positive electrode active material may be a compound capable of reversible intercalation and deintercalation of lithium (a lithiated intercalation compound). As the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0 < x < 1, 0 < y <1, 0 < z < 1, and x+y+z = 1 may be satisfied. The positive electrode active material may include one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211a may further include a positive electrode conductive material.

The positive electrode conductive material imparts conductivity to the first active material layer 211a, and any suitable electrically conductive material that does not cause a chemical change may be used. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers, such as polyphenylene derivatives, or a mixture thereof.

The first active material layer 211a may further include a positive electrode binder.

The positive electrode binder may attach the particles constituting the positive electrode active material to each other well, and also attach the positive electrode active material to the first electrode 211 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b on which the first active material layer 211a is not applied. The first uncoated portion 211b according to an embodiment may be disposed at an end region of the first electrode 211 facing a first direction. However, the first uncoated portion 211b is not limited to this form and, in an embodiment, may be formed over an entire edge region of the first electrode 211.

The second electrode 212 may function as a negative electrode of the electrode assembly 210.

The second electrode 212 according to an embodiment may be formed to have a foil shape including a metal material, such as copper, a copper alloy, nickel, or a nickel alloy. Both, or opposite, surfaces of the second electrode 212 may be disposed perpendicular to the second direction. A type, size, shape or the like of the second electrode 212 is not specifically limited as long as the second electrode 212 has conductivity and does not cause a chemical change in the secondary battery. A cross-sectional shape of the second electrode 212 may have any of various shapes in addition to the rectangular shape shown in FIG. 4.

A plurality of second electrodes 212 may be provided. The plurality of second electrodes 212 may be stacked along a direction. For example, the plurality of second electrodes 212 may be arranged along the longitudinal direction of the housing 100. The plurality of first electrodes 211 and second electrodes 212 may be alternately disposed along the second direction.

The second electrode 212 may include a second active material layer 212a and a second uncoated portion 212b.

The second active material layer 212a may be provided in a form of being applied on at least a portion of the second electrode 212. The second active material layer 212a may be applied on both, or opposite, surfaces of the second electrode 212, or may be applied on only one surface of the second electrode 212.

In an embodiment, the second electrode 212 functions as a negative electrode, and the second active material layer 212a may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₓ (0 < x ≤ 2, e.g., SnO₂), a Sn-based alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer 212a may further include a negative electrode conductive material and a negative electrode binder.

The negative electrode conductive material imparts conductivity to the second active material layer 212a, and any suitable electrically conductive material that does not cause a chemical change may be used. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like, conductive polymers, such as polyphenylene derivatives, or a mixture thereof.

The negative electrode binder may well attach particles constituting the negative electrode active material and also well attach the negative electrode active material to the second electrode 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 212 may include the second uncoated portion 212b on which the second active material layer 212a is not applied. The second uncoated portion 212b according to an embodiment may be disposed at an end region of the second electrode 212. However, the second uncoated portion 212b is not limited to this form, and, in an embodiment, may be formed over an entire edge region of the second electrode 212.

The separator 213 may be disposed between the first electrode 211 and the second electrode 212. The separator 213 may prevent or substantially prevent a short circuit between the first electrode 211 and the second electrode 212 while allowing lithium ions to move between the first electrode 211 and the second electrode 212. In an embodiment, the separator 213 may be disposed to surround (e.g., entirely surround) a surface region of the electrode assembly 210. Accordingly, the separator 213 may prevent or substantially prevent the first electrode 211 and the second electrode 212 from being directly exposed to an outside of the electrode assembly 210.

The separator 213 may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 213 may include a porous substrate and a coating layer including an organic material, an inorganic material, or a combination thereof, which is positioned on one surface or both, or opposite, surfaces of the porous substrate.

The porous substrate may be a polymer film made of a polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from Al₂Os, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer or may be in the form of a coating layer including (or containing) an organic material and a coating layer including (or containing) an inorganic material which are stacked on each other.

The electrode assembly 210 according to an embodiment may further include a first tab 214 and a second tab 215.

The first tab 214 may be connected to the first electrode 211.

The first tab 214 according to an embodiment may have a form of a foil extending from the first uncoated portion 211b of the first electrode 211. The first tab 214 may have a generally rectangular shape. However, a shape of the first tab 214 is not limited thereto, and may have any of various shapes.

In an embodiment, the first tab 214 may be formed integrally with the first electrode 211. For example, the first tab 214 may be a remaining region of the first uncoated portion 211b which remains after a partial region of the first uncoated portion 211b is cut or removed by notching processing or the like. In an embodiment, the first tab 214 may be manufactured separately from the first electrode 211 and then connected to the first uncoated portion 211b by welding or the like. In an embodiment, a material of the first tab 214 may be the same as a material of the first electrode 211.

A plurality of first tabs 214 may be provided. Each of the first tabs 214 may individually extend from the first uncoated portions 211b of different first electrodes 211. Neighboring first tabs 214 may be disposed to face each other along a stacked direction of the first electrode 211. The neighboring first tabs 214 may be disposed parallel to each other. The neighboring first tabs 214 may be in contact with each other and may be spaced apart from each other by a thickness of the separator 213.

The plurality of first tabs 214 may be provided on each first electrode 211. For example, a pair of first tabs 214 may be formed on each first electrode 211.

The second tab 215 may be connected to the second electrode 212.

The second tab 215 according to an embodiment may have a form of a foil extending from the second uncoated portion 212b of the second electrode 212. Extending directions of the first tab 214 and the second tab 215 may be opposite to each other, or the extending directions of the first tab 214 and the second tab 215 may be the same. In FIG. 5, an example in which the first tab 214 extends to the right from the first electrode 211, and the second tab 215 extends to the left from the second electrode 212 is shown, but the extending directions of the first tab 214 and the second tab 215 are not limited thereto, and, for example, the first tab 214 and the second tab 215 may extend upward or downward from the first electrode 211 and the second electrode 212, respectively.

The second tab 215 may have a generally rectangular shape. However, a shape of the second tab 215 is not limited thereto and may have any of various shapes.

In an embodiment, the second tab 215 may be formed integrally with the second electrode 212. For example, the second tab 215 may be a remaining region of the second uncoated portion 212b which remains after a partial region of the second uncoated portion 212b is cut or removed by notching processing or the like. In an embodiment, the second tab 215 may be manufactured separately from the second electrode 212 and then connected to the second uncoated portion 212b by welding or the like. In an embodiment, a material of the second tab 215 may be the same as a material of the second electrode 212.

A plurality of second tabs 215 may be provided. Each of the second tabs 215 may individually extend from the second uncoated portions 212b of different second electrodes 212. Neighboring second tabs 215 may be disposed to face each other along a stacked direction of the second electrode 212. The neighboring second tabs 215 may be disposed parallel to each other. The neighboring second tabs 215 may be in contact with each other and may be spaced apart by the thickness of the separator 213.

The plurality of second tabs 215 may be provided on each second electrode 212. For example, a pair of second tabs 215 may be formed on each second electrode 212.

The case 220 may generally form an exterior of the battery cell 200 and may accommodate the electrode assembly 210. In an embodiment, the case 220 may include a conductive metal material, such as aluminum, an aluminum alloy, or nickel-plated steel.

The case 220 according to an embodiment may include a bottom portion 221, an end portion 222, and a side portion 223.

The bottom portion 221 may form an exterior of a lower side of the case 220. The bottom portion 221 according to an embodiment may have a rectangular plate shape. The bottom portion 221 may be disposed to face a bottom surface of the housing 100. The bottom portion 221 may be seated on the bottom surface of the housing 100.

The end portion 222 may extend from the bottom portion 221 and form a portion of an exterior of a side surface of the case 220.

The end portion 222 according to an embodiment may have a rectangular plate shape extending upward from the bottom portion 221. The end portion 222 may be disposed perpendicular to the bottom portion 221. A lower end portion of the end portion 222 may be connected to an edge of the bottom portion 221. An upper end portion of the end portion 222 may be disposed to face an open side of the housing 100.

The end portion 222 may be disposed to face the end plate 120 along the longitudinal direction of the housing 100. The end portion 222 may be disposed parallel to the end plate 120.

A pair of end portions 222 may be provided. The pair of end portions 222 may be disposed to be spaced apart at a certain interval and may face each other along the longitudinal direction of the housing 100. The pair of end portions 222 may be disposed parallel to each other.

The side portion 223 may extend from the bottom portion 221 and form a remaining portion of the exterior of the side surface of the case 220.

The side portion 223 according to an embodiment may have a rectangular plate shape extending upward from the bottom portion 221. The side portion 223 may be disposed perpendicular to the end portion 222. An area of the side portion 223 may be smaller than an area of the end portion 222.

A lower end portion of the side portion 223 may be connected to an edge of the bottom portion 221. An upper end portion of the side portion 223 may be disposed to face an open side of the housing 100.

The side portion 223 may be disposed to face the side plate 130 along the width direction of the housing 100. The side portion 223 may be disposed parallel to the side plate 130.

A pair of side portions 223 may be provided. The pair of side portions 223 may be disposed spaced apart at a certain interval and may face each other along the width direction of the housing 100. The pair of side portions 223 may be disposed parallel to each other.

Accordingly, the case 220 according to an embodiment may be formed to have a rectangular parallelepiped shape having an open upper end portion.

The cap plate 230 may be coupled to the case 220 and may seal the case 220.

The cap plate 230 according to an embodiment may be formed to have a flat plate shape. The cap plate 230 may be disposed on an upper side of the case 220. A lower side surface of the cap plate 230 may be disposed spaced apart at a certain interval and may face the bottom portion 221 of the case 220. The cap plate 230 may be disposed parallel to the bottom portion 221 of the case 220.

In an embodiment, the cap plate 230 may be seated on upper end portions of the side portion 223 and the end portion 222. In an embodiment, the cap plate 230 may be inserted into the case 220 and a peripheral surface of the cap plate 230 may be in contact with inner side surfaces of the side portion 223 and the end portion 222. The cap plate 230 may be coupled to the upper end portions of the side portion 223 and the end portion 222 by any of various types of coupling methods, such as any of welding, bolting, fitting, and the like.

The terminal 240 may be coupled to the cap plate 230 and may protrude outward from the cap plate 230. The terminal 240 may be electrically connected to the electrode assembly 210.

The terminal 240 according to an embodiment may vertically pass through the cap plate 230. An upper end portion of the terminal 240 may protrude outward from the cap plate 230, and a lower end portion of the terminal 240 may protrude into the case 220. A shape of the terminal 240 is not limited to the shape shown in the drawings, and may have any of various shapes.

The terminal 240 may be formed of an electrically conductive material, such as aluminum, nickel, copper, or the like.

A pair of terminals 240 may be provided. The pair of terminals 240 may be disposed spaced apart from each other at a certain interval on the cap plate 230 along the width direction of the housing 100.

The pair of terminals 240 may be individually (e.g., respectively) connected to the first electrode 211 and the second electrode 212 of the electrode assembly 210. Accordingly, the pair of terminals 240 may function as a positive electrode terminal and a negative electrode terminal of the battery cell 200, respectively.

For example, one terminal 240 of the pair of terminals 240 may be connected to the first tab 214. In an embodiment, one of the pair of terminals 240 may be indirectly connected to the first tab 214 through a current collector 241 welded to the first tab 214. In an embodiment, the terminal 240 may be directly connected to the first tab 214.

Further, the other terminal 240 of the pair of terminals 240 may be connected to the second tab 215. In an embodiment, the other terminal 240 of the pair of terminals 240 may be indirectly connected to the second tab 215 through a current collector 241 welded to the second tab 215. In an embodiment, the terminal 240 may be directly connected to the second tab 215.

An insulator G may be installed between the electrode assembly 210 and the cap plate 230. A pair of insulators G may be provided. The pair of insulators G may be disposed to individually (e.g., respectively) surround different terminals 240. The insulator G may be formed of an insulating material, such as polyethylene (PE), polypropylene (PP), polyethylene terephthalate (PET), rubber, or the like.

The vent 250 may be installed in the cap plate 230, and may be opened and closed in response to a change in internal pressure of the case 220. The vent 250 may provide a discharge path for gas, flames, smoke, or the like generated in the case 220 if the internal pressure of the case 220 rises above a certain magnitude (e.g., a set magnitude), such as due to overcurrent, thermal runaway, or the like. In an embodiment, the vent 250 may be disposed between the pair of terminals.

In an embodiment, the vent 250 may include a vent hole 251 and a vent plate 252.

The vent hole 251 may be formed to have a form of a hole vertically passing through the cap plate 230. A lower side of the vent hole 251 may be connected to an inner space of the case 220. An upper side of the vent hole 251 may be connected to a space outside the cap plate 230. A cross-sectional shape of the vent hole 251 may have any of various shapes, such as any of an oval shape, a circular shape, a polygonal shape, and the like. In an embodiment, an area of the vent 250, a length of the vent 250, and a width of the vent 250 described below may be the same as an area of the vent hole 251, a length of the vent hole 251, and a width of the vent hole 251, respectively.

The vent plate 252 may seal the vent hole 251. The vent plate 252 may selectively open and close the vent hole 251 in response to a change in internal pressure of the case 220. That is, the vent plate 252 may maintain a closed state of the vent hole 251 during normal operation of the battery cell 200. The vent plate 252 may be broken or rupture and open the vent hole 251 if the internal pressure of the case 220 rises above a certain magnitude (e.g., a set magnitude), such as due to overcharging of the battery cell 200, the occurrence of fire, or the like. Accordingly, flames, gas, smoke, and the like generated inside the case 220 may be discharged to the outside of the case 220 through the vent hole 251.

The vent plate 252 according to an embodiment may be formed to have a flat plate shape. In an embodiment, a thickness of the vent plate 252 may be smaller than a thickness of the cap plate 230. An upper surface of the vent plate 252 may be coupled to a lower surface of the cap plate 230 by any of various types of coupling methods, such as any of welding, bolting, fitting, and the like. In an embodiment, the vent plate 252 may be inserted into the vent hole 251, and a peripheral surface of the vent plate 252 may be coupled to an inner side surface of the vent hole 251.

In an embodiment, a vent notch 253 may be formed in the vent plate 252 to induce a rupture action of the vent plate 252. The vent notch 253 according to an embodiment may have a groove shape concavely recessed from an outer surface of the vent plate 252 toward the inside of the vent plate 252. A shape of the vent notch 253 is not limited to the shape shown in FIG. 3 and may be formed to have any of various patterns on the vent plate 252.

The bus bar 300 may electrically interconnect a plurality of battery cells 200. A plurality of bus bars 300 may be provided. Each bus bar 300 may individually connect a pair of neighboring battery cells 200 disposed in the housing 100.

The bus bar 300 according to an embodiment may be formed of an electrically conductive material, such as copper, nickel, aluminum, or the like. The bus bar 300 may be disposed on an upper side of the battery cell 200. Both, or opposite, ends of the bus bar 300 may be connected to a terminal 240 and another terminal 240 of the pair of neighboring battery cells 200 disposed along the longitudinal direction of the housing 100, respectively. Depending on a type of terminals 240 connected to both ends of the bus bar 300, the bus bar 300 may connect the neighboring battery cells 200 in series or in parallel. A shape of the bus bar 300 is not limited to the shape shown in FIG. 2 and may be designed to have any of various shapes capable of electrically connecting the neighboring battery cells 200.

The plurality of bus bars 300 may be arranged in a plurality of rows along the longitudinal direction of the housing 100. The plurality of bus bars 300 may be arranged in two rows along the width direction of the housing 100. A number and arrangement of the bus bars 300 may be designed in various ways depending on a number of battery cells 200, a serial structure or connection structure of the battery cells 200, and the like.

The bus bar 300 according to an embodiment may be supported by a holder 301.

The holder 301 may support the bus bar 300 in the housing 100 and protect the battery cell 200 from an external impact and the like.

The holder 301 according to an embodiment may be disposed on an upper side of the cap plate 230 of the battery cell 200. The holder 301 may have a plate shape disposed parallel to the cap plate 230. The cap plates 230 of the plurality of battery cells 200 may be disposed to face a lower surface of the holder 301.

The holder 301 may be formed of an insulating material. Accordingly, the holder 301 may be electrically insulated from the battery cell 200 and the bus bar 300.

A plurality of through holes vertically passing through the holder 301 may be formed in both, or opposite, sides of the holder 301. The bus bar 300 may be inserted into the through holes and may be coupled to the holder 301 by any of various types of coupling methods, such as any of welding, bolting, fitting, hook coupling, and the like. A lower end portion of the bus bar 300 may protrude downward from the holder 301 through the through hole and may come into contact with the terminals 240 of the battery cell 200.

A plurality of holder vent holes 302 may be formed in the holder 301.

The holder vent holes 302 may vertically pass through the holder 301, and may be disposed to face the vents 250 of the battery cells 200.

The plurality of holder vent holes 302 may be provided. The plurality of holder vent holes 302 may be arranged along the longitudinal direction of the housing 100. In an embodiment, each of the holder vent holes 302 may be individually (e.g., respectively) disposed to face the vent 250 of a different battery cell 200.

In an embodiment, an area of the holder vent hole 302 may be larger than the area of the vent 250. Accordingly, if the vent 250 is opened, flames or gas discharged from the vent 250 may not be interfered with by the holder 301.

The cover assembly 400 may be coupled to the housing 100 and may seal the housing 100. That is, the cover assembly 400 may cover an open upper space of the housing 100 to close an inner space of the housing 100.

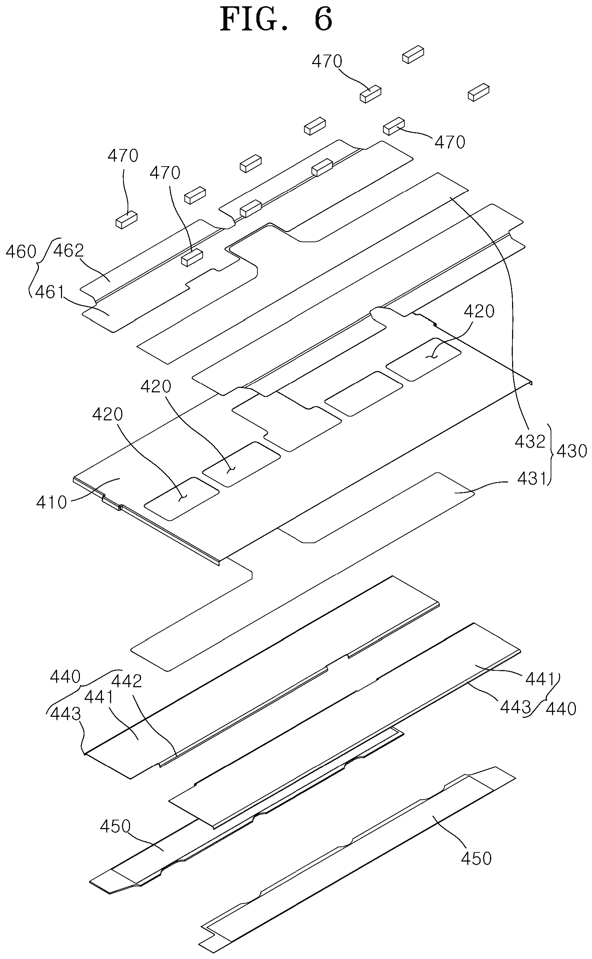

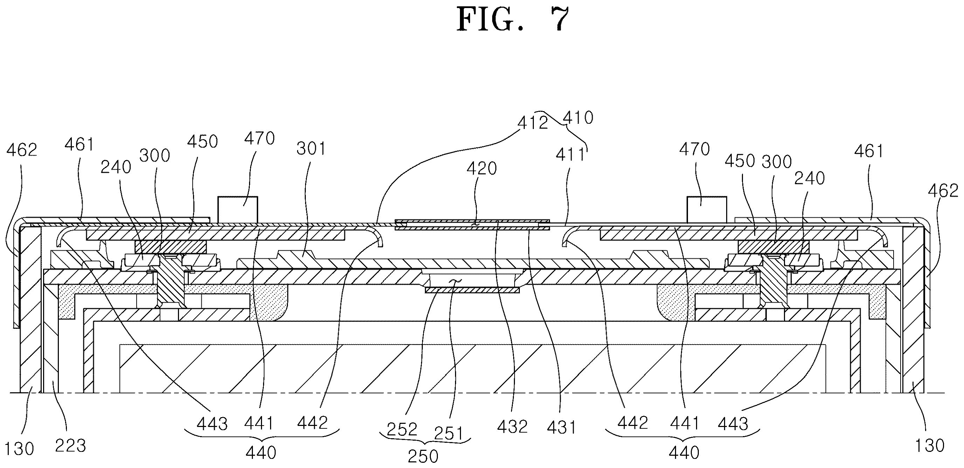

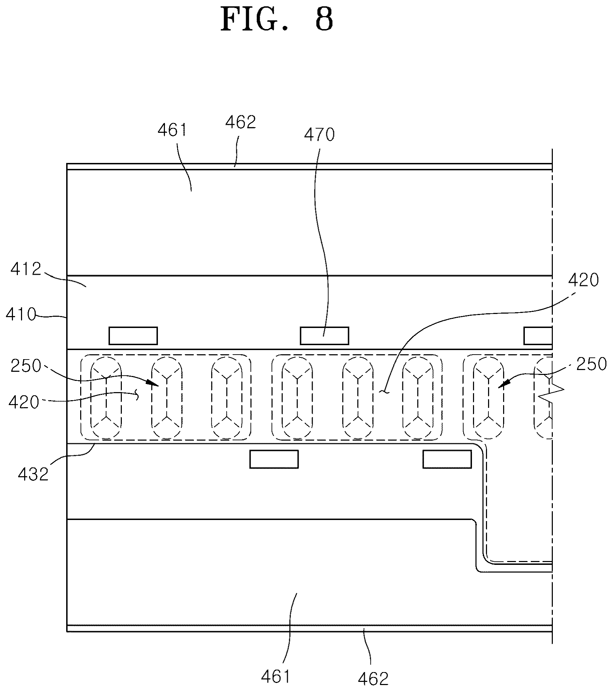

FIG. 6 is an exploded perspective view schematically showing a configuration of a cover assembly according to an embodiment of the present disclosure; FIG. 7 is a cross-sectional view schematically showing the configuration of the cover assembly according to an embodiment of the present disclosure; and FIG. 8 is a plan view schematically showing the configuration of the cover assembly according to an embodiment of the present disclosure.

Referring to FIGS. 1 to 8, the cover assembly 400 according to an embodiment includes a cover 410, a cover hole 420, and a cover film 430.

The cover 410 may be disposed on an upper side of the battery cell 200.

The cover 410 according to an embodiment may have a flat plate shape including an inner cover surface 411 and an outer cover surface 412 opposite to each other.

The inner cover surface 411 may be a lower surface of the cover 410 disposed to face the battery cell 200. The inner cover surface 411 may be disposed to face the cap plate 230 of the battery cell 200. The inner cover surface 411 may be disposed parallel to the bottom plate 110 of the housing 100. In an embodiment, an area of the inner cover surface 411 may be the same as or larger than an area of an upper end portion of the housing 100.

The outer cover surface 412 may be an upper surface of the cover 410 disposed to face a space outside the housing 100. The outer cover surface 412 may be disposed parallel to the bottom plate 110 of the housing 100 and the inner cover surface 411.

The cover 410 may be seated on the upper end portion of the housing 100. For example, the cover 410 may be seated on the upper end portion of the side plate 130. However, the cover 410 is not limited thereto, and may be seated on an upper end portion of the end plate 120 or seated on upper end portions of the end plate 120 and the side plate 130.

An edge region of the cover 410 may be coupled to the upper end portion of the housing 100 by any of various types of coupling methods, such as any of welding, bolting, fitting, hook coupling, and the like.

A longitudinal direction and a width direction of the cover 410 to be described below may refer to the same directions as the longitudinal direction and the width direction of the housing 100, respectively.

The cover hole 420 may have a form of a hole passing through the inner cover surface 411 and the outer cover surface 412. The cover hole 420 may be disposed to face the vent 250 of the battery cell 200. Accordingly, the cover hole 420 may provide a path through which flames or gas discharged from the vent 250 during thermal runaway of the battery cells 200 may be discharged to the outside of the cover 410.

A plurality of cover holes 420 may be provided. The cover holes 420 may be arranged along the longitudinal direction of the cover 410. A shape of each of the cover holes 420 may be formed the same as or different from each other.

In an embodiment, an area of the cover hole 420 may be larger than the area of the vent 250. Accordingly, the flames or gas discharged from the vent 250 may not be directly interfered with by the cover 410.

In an embodiment, each of the cover holes 420 may be disposed to face at least two or more vents 250 of the battery cells 200. For example, as shown in FIG. 8, each of the cover holes 420 may be disposed to face three vents 250. However, the present disclosure is not limited thereto, and the number of vents 250 facing each cover hole 420 may be any of various numbers, such as two or four.

The cover film 430 may be disposed to face the cover hole 420, and may open and close (e.g., selectively open and close) the cover hole 420.

The cover film 430 may close the cover hole 420 during normal operation of the battery cell 200 to seal the inner space of the housing 100. Accordingly, the cover film 430 may block foreign substances, moisture, and the like from being introduced into the inner space of the housing 100 through the cover hole 420.

If the vent 250 is opened due to the thermal runaway of the battery cells 200, and an internal pressure of the housing 100 increases due to gas, flames, or the like discharged from the vent 250, the cover film 430 may be broken or rupture and may open the cover hole 420. Accordingly, the cover film 430 may prevent or substantially prevent chain ignition of the battery cells 200 by inducing the flames or gas generated inside the housing 100 during the thermal runaway of the battery cells 200 to be quickly discharged to the outside of the housing 100 through the cover hole 420.

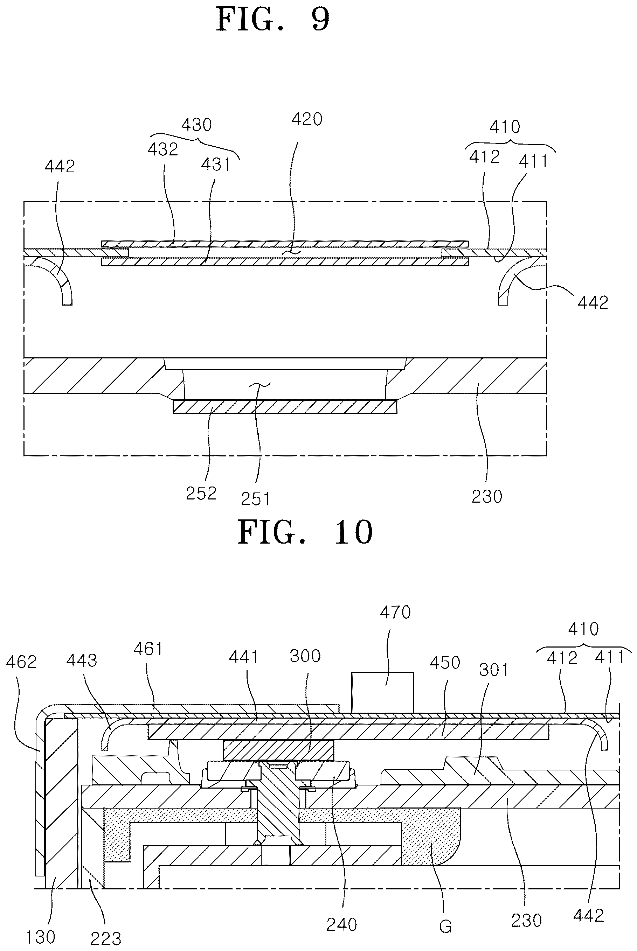

FIG. 9 is a cross-sectional view schematically showing a configuration of the cover film according to an embodiment of the present disclosure.

Referring to FIGS. 1 to 9, the cover film 430 according to an embodiment may include an inner cover film 431 and an outer cover film 432.

Herein, an example in which the cover film 430 includes both the inner cover film 431 and the outer cover film 432 will be described, but the cover film 430 is not limited thereto, and may be configured to include only one of the inner cover film 431 and the outer cover film 432.

The inner cover film 431 may be disposed between the inner cover surface 411 and the battery cell 200.

An upper surface of the inner cover film 431 may be disposed to face the inner cover surface 411. The upper surface of the inner cover film 431 may be in contact with the inner cover surface 411 and may be fixed to the inner cover surface 411. The upper surface of the inner cover film 431 may be fixed to the inner cover surface 411 by any of various types of coupling methods, such as any of adhering, bolting, welding, pressing, fitting, hook coupling, and the like.

The upper surface of the inner cover film 431 may be disposed to face a lower end portion of the cover hole 420 and may seal the lower end portion of the cover hole 420.

A lower surface of the inner cover film 431 may be disposed spaced apart from the cap plate 230 of the battery cell 200 at a certain interval. The lower surface of the inner cover film 431 may be disposed to face the vent 250 of the battery cell 200.

A longitudinal direction of the inner cover film 431 may be parallel to the longitudinal direction of the cover 410. In an embodiment, a length of the inner cover film 431 may be smaller than a length of the cover 410, and larger than a length of the cover hole 420. A width direction of the inner cover film 431 may be parallel to the width direction of the cover 410. In an embodiment, a width of the inner cover film 431 may be smaller than a width of the cover 410 and larger than a width of the cover hole 420. Accordingly, the inner cover film 431 may seal the cover hole 420 without a gap.

In an embodiment, the inner cover film 431 may continuously extend along the longitudinal direction of the cover 410 and may be disposed to face all of the plurality of cover holes 420.

In an embodiment, a plurality of inner cover films 431 may be provided. In this case, the plurality of inner cover films 431 may be arranged along the longitudinal direction of the cover 410 and may be disposed to individually (e.g., respectively) face different cover holes 420.

The inner cover film 431 may be broken or rupture and may open the cover hole 420 if the internal pressure of the housing 100 rises above a certain pressure (e.g., a set pressure), or the housing 100 is heated above a certain temperature (e.g., a set temperature) due to the thermal runaway of the battery cells 200. In an embodiment, the inner cover film 431 may be formed of a material having lower rigidity or a lower melting point than the cover 410, or may be formed to have a smaller thickness than the cover 410.

Although not shown in the drawings, in an embodiment, a plurality of notches concavely formed from a surface of the inner cover film 431 may be formed in the inner cover film 431 such that the inner cover film 431 may be quickly broken during the thermal runaway of the battery cells 200. In an embodiment, each notch may be disposed at a position facing a different cover hole 420.

The outer cover film 432 may be disposed on the outer cover surface 412. In an embodiment, the outer cover film 432 may be formed symmetrically with the inner cover film 431 with the cover 410 therebetween.

An upper surface of the outer cover film 432 may be disposed to face a space outside the cover 410.

A lower surface of the outer cover film 432 may be disposed to face the outer cover surface 412. The lower surface of the outer cover film 432 may be in contact with the outer cover surface 412 and may be fixed to the outer cover surface 412. The lower surface of the outer cover film 432 may be fixed to the outer cover surface 412 by any of various types of coupling methods, such as any of adhering, bolting, welding, pressing, fitting, hook coupling, and the like.

The lower surface of the outer cover film 432 may be disposed to face an upper end portion of the cover hole 420 and may seal the upper end portion of the cover hole 420.

A longitudinal direction of the outer cover film 432 may be parallel to the longitudinal direction of the cover 410. In an embodiment, a length of the outer cover film 432 may be smaller than the length of the cover 410 and larger than the length of the cover hole 420. A width direction of the outer cover film 432 may be parallel to the width direction of the cover 410. In an embodiment, a width of the outer cover film 432 may be smaller than the width of the cover 410 and larger than the width of the cover hole 420. Accordingly, the outer cover film 432 may seal the cover hole 420 without a gap.

In an embodiment, the outer cover film 432 may continuously extend along the longitudinal direction of the cover 410 and may be disposed to face all of the plurality of cover holes 420.

In an embodiment, a plurality of outer cover films 432 may be provided. In this case, the plurality of outer cover films 432 may be arranged along the longitudinal direction of the cover 410 and may be disposed to individually (e.g., respectively) face different cover holes 420.

The outer cover film 432 may be broken or rupture and may open the cover hole 420 if the internal pressure of the housing 100 rises above a certain pressure (e.g., a set pressure), or the housing 100 is heated above a certain temperature (e.g., a set temperature) due to the thermal runaway of the battery cells 200. In an embodiment, the outer cover film 432 may be formed of a material having lower rigidity or a lower melting point than the cover 410, or may be formed to have a smaller thickness than the cover 410.

Although not shown in the drawings, in an embodiment, a plurality of notches concavely formed from a surface of the outer cover film 432 may be formed in the outer cover film 432 such that the outer cover film 432 may be quickly broken during the thermal runaway of the battery cells 200. Each notch may be disposed at a position facing a different cover hole 420.

FIG. 6 shows an example in which the inner cover film 431 and the outer cover film 432 have a same shape, but the inner cover film 431 and the outer cover film 432 are not limited thereto, and may have different shapes.

The cover assembly 400 according to an embodiment may further include a first blocking member 440.

The first blocking member 440 may be disposed between the cover 410 and the bus bar 300. The first blocking member 440 may be disposed to surround the bus bar 300. Accordingly, the first blocking member 440 may block flames, gas, and other scattered objects discharged from the vent 250 during thermal runaway of the battery cells 200 from coming into direct contact with the bus bar 300.

The first blocking member 440 may be fixed to the cover 410. Accordingly, the first blocking member 440 may be aligned relatively to the bus bar 300 during an installation process of the cover 410 without separate installation work.

In an embodiment, a pair of first blocking members 440 may be provided. The pair of first blocking members 440 may be spaced apart from each other along the width direction of the cover 410. The pair of first blocking members 440 may be disposed to face each other along the width direction of the cover 410 with the inner cover film 431 therebetween. Each of the pair of first blocking members 440 may be disposed to individually surround the bus bars 300 disposed in two rows along the width direction of the housing 100.

The first blocking member 440 may be formed of a heat-resistant material, such as mica, aerosol, Aerofoam^{®}, polyacrylonitrile (PAN) fiber, silicone foam, or the like, to prevent or substantially prevent damage caused by flames or gas discharged from the vents 250.

FIG. 10 is a cross-sectional view schematically showing a configuration of the first blocking member according to an embodiment of the present disclosure.

Referring to FIGS. 1 to 10, the first blocking member 440 according to an embodiment may include a blocking body 441 and a first bent portion 442.

The blocking body 441 may be disposed between the inner cover surface 411 and the bus bar 300.

An upper surface of the blocking body 441 may be disposed to face the inner cover surface 411. The upper surface of the blocking body 441 may be in contact with the inner cover surface 411 and may be fixed to the inner cover surface 411. The blocking body 441 may be fixed to the inner cover surface 411 by any of various types of coupling methods, such as any of bonding, bolting, welding, pressing, fitting, hook coupling, and the like.

A lower surface of the blocking body 441 may be disposed to face the upper surface of the bus bar 300. The lower surface of the blocking body 441 may be spaced apart from the upper surface of the bus bar 300 at a certain interval.

A longitudinal direction of the blocking body 441 may be disposed parallel to the longitudinal direction of the cover 410. In an embodiment, a length of the blocking body 441 may be larger than the length of the bus bar 300 extending along the longitudinal direction of the cover 410. In an embodiment, the blocking body 441 may continuously extend along the longitudinal direction of the cover 410, and may be disposed to face all of the plurality of bus bars 300 arranged along the longitudinal direction of the cover 410.

In an embodiment, a plurality of blocking bodies 441 may be provided. In this case, the plurality of blocking bodies 441 may be arranged along the longitudinal direction of the cover 410, and each blocking body 441 may be disposed to individually face a different bus bar 300.

A width of the blocking body 441 may be disposed parallel to the width direction of the cover 410. In an embodiment, the width of the blocking body 441 may be larger than the width of the bus bar 300 extending along the width direction of the cover 410.

The first bent portion 442 may be bent from the blocking body 441 toward the battery cell 200.

The first bent portion 442 according to an embodiment may be bent downward from an end portion of the blocking body 441 disposed to face the space formed between the vent 250 and the cover hole 420 toward the cap plate 230.

The first bent portion 442 may be disposed between the bus bar 300 and the vent 250, and, in an embodiment, between the bus bar 300 and the space formed between the vent 250 and the cover hole 420. That is, the first bent portion 442 may have a form of a partition wall which blocks the space between the bus bar 300 and the vent 250. Accordingly, the first bent portion 442 may block flames, gas, and other scattered objects discharged from the vent 250 from being transferred to the bus bar 300.

The first bent portion 442 may extend continuously along the longitudinal direction of the blocking body 441, or a plurality of first bent portions 442 may be provided and arranged along the longitudinal direction of the blocking body 441.

The first blocking member 440 according to an embodiment may further include a second bent portion 443. The second bent portion 443 may be bent from the blocking body 441 toward the battery cell 200 and may be spaced apart from the first bent portion 442.

The second bent portion 443 according an embodiment may be located at an opposite side from the first bent portion 442, and may be bent downward from another end portion of the blocking body 441 disposed to face the side plate 130 toward the cap plate 230.

The second bent portion 443 may be disposed between the bus bar 300 and the side plate 130. That is, the second bent portion 443 may have a form of a partition wall which blocks the space between the bus bar 300 and the side plate 130. Accordingly, the second bent portion 443 may block flames, gas, and other scattered objects which have spread to an edge region of the housing 100 after being discharged from the vent 250 from being transferred to the bus bar 300.

The cover assembly 400 according to an embodiment may further include a second blocking member 450.

The second blocking member 450 may be disposed between the first blocking member 440 and the bus bar 300. The second blocking member 450 may secondarily block flames, gases, and other scattered objects introduced into the first blocking member 440 from being in direct contact with the bus bar 300 if the flames, gases, and other scattered objects are introduced into the first blocking member 440 due to lifting or expansion of the cover 410.

The second blocking member 450 according to an embodiment may be disposed between the blocking body 441 and the bus bar 300.

An upper surface of the second blocking member 450 may be disposed to face the lower surface of the blocking body 441. The lower surface of the second blocking member 450 may be in surface contact with the upper surface of the bus bar 300.

In an embodiment, an area of the second blocking member 450 may be larger than the area of the bus bar 300. Accordingly, the upper surface of the bus bar 300 may be maintained in a state of not being exposed to the outside by the second blocking member 450.

For example, a longitudinal direction of the second blocking member 450 may be disposed parallel to the longitudinal direction of the cover 410. In an embodiment, a length of the second blocking member 450 may be larger than the length of the bus bar 300 extending along the longitudinal direction of the cover 410. In an embodiment, the second blocking member 450 may continuously extend along the longitudinal direction of the cover 410, and may be in contact with all of the plurality of bus bars 300 arranged along the longitudinal direction of the cover 410.

In an embodiment, a plurality of second blocking members 450 may be provided. In this case, the plurality of secondary blocking members 450 may be arranged along the longitudinal direction of the cover 410, and each of the second blocking members 450 may be disposed to individually face a different bus bar 300.

A width of the second blocking member 450 may be disposed parallel to the width direction of the cover 410. In an embodiment, the width of the second blocking member 450 may be larger than the width of the bus bar 300 extending along the width direction of the cover 410.

In an embodiment, the second blocking member 450 may not be fixed to the blocking body 441. For example, the upper surface of the second blocking member 450 may simply come into contact with the lower surface of the blocking body 441. Accordingly, the second blocking member 450 may maintain contact with the bus bar 300 without moving along with the first blocking member 440 if the cover 410 and the first blocking member 440 move upward due to an increase in the internal pressure of the housing 100.

The second blocking member 450 may be formed of a material with high thermal conductivity, such as a thermal pad, thermal interface material (TIM) pad, or the like. Accordingly, the second blocking member 450 may prevent or substantially prevent chain ignition caused by overheating of the bus bar 300 by quickly discharging heat transferred to the bus bar 300.

The cover assembly 400 according to an embodiment may further include a fixing member 460.

The fixing member 460 may be disposed on an outside of the cover 410 and may fix the cover 410 to the housing 100. The fixing member 460 may prevent or substantially prevent the cover 410 from being separated from the housing 100 due to an increase in the internal pressure of the housing 100 during thermal runaway of the battery cells 200, and may prevent or substantially prevent flames, gas, and other scattered objects from leaking through a gap between the cover 410 and the housing 100.

A plurality of fixing members 460 may be provided. For example, in an embodiment, a pair of fixing members 460 may be provided. The pair of fixing members 460 may be spaced apart from each other along the width direction of the cover 410. Each fixing member 460 may individually fix one of both, or opposite, sides of the cover 410 in the width direction to the housing 100. However, a number and arrangement of the fixing members 460 are not limited thereto, and the fixing members 460 may have any of various shapes within a range in which the cover 410 can be fixed to the housing 100.

The fixing member 460 may be formed of a heat-resistant material, such as mica, aerosol, Aerofoam^{®}, polyacrylonitrile (PAN) fiber, silicone foam, or the like. Accordingly, when a plurality of battery modules are provided, the fixing member 460 may protect the cover 410 from flames, gas, and other scattered objects discharged from neighboring battery modules.

The fixing member 460 according to an embodiment may include a first sheet 461 and a second sheet 462.

The first sheet 461 may form an exterior of a side of the fixing member 460 and may be fixed to the outer cover surface 412.

The first sheet 461 according to an embodiment may be disposed parallel to the outer cover surface 412. A lower surface of the first sheet 461 may be seated on the outer cover surface 412. The first sheet 461 may be disposed at a position that does not directly face the cover hole 420 and the outer cover film 432. In an embodiment, a length of the first sheet 461 may be the same as or smaller than the length of the cover 410. The first sheet 461 may be fixed to the outer cover surface 412 by any of various types of coupling methods, such as any of adhering, welding, bolting, pressing, fitting, hook coupling, riveting, and the like.

The second sheet 462 may form an exterior of another side of the fixing member 460 and may be fixed to the housing 100.

The second sheet 462 according to an embodiment may extend from an end portion of the first sheet 461 to the outside of the cover 410. The second sheet 462 may be bent downward from an end portion of the first sheet 461, and may be disposed parallel to the side plate 130 of the housing 100. An inner side surface of the second sheet 462 may be in contact with an outer side surface of the side plate 130. The second sheet 462 may be fixed to the side plate 130 by any of various types of coupling methods, such as any of adhering, welding, bolting, pressing, fitting, hook coupling, riveting, and the like.

The cover assembly 400 according to an embodiment may further include a pressing member 470.

The pressing member 470 may press the cover 410 toward the housing 100. Accordingly, the pressing member 470 may prevent or substantially prevent the cover 410 from lifting or expanding by applying a pressing force to the cover 410 in a direction in which the internal pressure of the housing 100 is offset during thermal runaway of the battery cells 200.

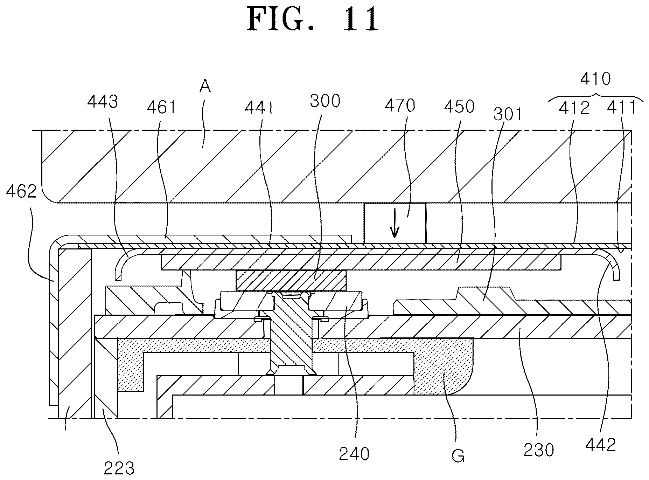

FIG. 11 is a view schematically showing a configuration of the pressing member according to an embodiment of the present disclosure.

Referring to FIGS. 1 to 11, the pressing member 470 according to an embodiment may protrude upward from the outer cover surface 412. The pressing member 470 may be disposed between the fixing member 460 and the cover hole 420. For example, the pressing member 470 may be disposed between the first sheet 461 and the outer cover film 432.

A lower end portion of the pressing member 470 may be fixed to the outer cover surface 412. The lower end portion of the pressing member 470 may be fixed to the outer cover surface 412 by any of various types of coupling methods, such as any of adhering, welding, bolting, pressing, fitting, hook coupling, riveting, and the like.

An upper end portion of the pressing member 470 may be in contact with a structure "A" located on an upper side of the cover 410. The structure "A" may be, for example, an upper cover or the like of a pack housing when the battery module according to an embodiment is accommodated in the separate pack housing. However, the structure "A" is not limited thereto, and may have any of various configurations which can be located on the upper side of the cover 410, such as the bottom plate 110 of another battery module, a ceiling surface of a building, and the like.

The pressing member 470 may press the cover 410 downward by contact with the structure "A." Accordingly, the pressing member 470 may apply the pressing force to the cover 410 in the direction in which the internal pressure of the housing 100 is offset during thermal runaway of the battery cells 200.

In an embodiment, the pressing member 470 may be provided with an elastically deformable material, such as silicone, rubber, or the like. Accordingly, the pressing member 470 may further increase the pressing force applied to the cover 410 by an elastic force of the pressing member 470.

In an embodiment, a plurality of pressing members 470 may be provided. The plurality of pressing members 470 may be arranged in any of various patterns on the outer cover surface 412.

According to embodiments of the present disclosure, as flames, gas, and other scattered objects discharged from vents during thermal runaway of battery cells are quickly discharged to the outside of a housing, chain ignition of the battery cells can be prevented or substantially prevented.

According to embodiments of the present disclosure, as flames, gas, and other scattered objects discharged from the vents during thermal runaway of the battery cells are blocked from being in direct contact with a bus bar, chain ignition of the battery cells can be prevented or substantially prevented.

According to embodiments of the present disclosure, detachment and expansion of a cover due to an increase in internal pressure of the housing can be prevented or substantially prevented.

However, aspects and effects obtainable through the present disclosure are not limited to the above aspects and effects, and other aspects and technical effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery module comprising:
a housing;
a plurality of battery cells accommodated in the housing and each comprising a vent;
a plurality of bus bars connecting neighboring battery cells of the plurality of battery cells;
a cover comprising an inner cover surface facing the plurality of battery cells, and an outer cover surface opposite the inner cover surface;
one or more cover holes passing through the inner cover surface and the outer cover surface and facing the vents; and
a cover film facing the one or more cover holes and configured to open and close the one or more cover holes.

2. The battery module as claimed in claim 1, wherein an area of a cover hole of the one or more cover holes is larger than an area of a vent of the vents.

3. The battery module as claimed in claim 1 or claim 2, wherein a cover hole of the one or more cover holes faces at least two or more vents of the battery cells.

4. The battery module as claimed in any one of the preceding claims, wherein the cover film comprises an inner cover film between the inner cover surface and the plurality of battery cells.

5. The battery module as claimed in any one of the preceding claims, wherein the cover film comprises an outer cover film on the outer cover surface.

6. The battery module as claimed in any one of the preceding claims, wherein each of the bus bars is between the neighboring battery cells and the cover, and
the battery module further comprises a first blocking member between the cover and a bus bar of the bus bars.

7. The battery module as claimed in claim 6, wherein the first blocking member is fixed to the cover.

8. The battery module as claimed in claim 6 or claim 7, wherein the first blocking member surrounds the bus bar.

9. The battery module as claimed in any one of claims 6 to 8, wherein the first blocking member comprises:
a blocking body facing the inner cover surface and spaced apart from the bus bar; and
a first bent portion that is bent from the blocking body toward the battery cell.

10. The battery module as claimed in claim 9, wherein the first bent portion is between the vent and the bus bar.

11. The battery module as claimed in any one of claims 6 to 10, wherein the first blocking member further comprises a second bent portion that is bent from the blocking body toward the battery cell, and spaced apart from the first bent portion.

12. The battery module as claimed in any one of claims 6 to 11, further comprising a second blocking member between the first blocking member and the bus bar and in contact with the bus bar.

13. The battery module as claimed in any one of the preceding claims, further comprising a fixing member on an outside of the cover and fixing the cover to the housing.

14. The battery module as claimed in claim 13, wherein the fixing member comprises:
a first sheet fixed to the outer cover surface; and
a second sheet extending from the first sheet and fixed to the housing.

15. The battery module as claimed in claim 13 or claim 14, further comprising a pressing member protruding from the outer cover surface.
